Europäisches Patentamt

European Patent Office

Office européen des brevets

(11) Veröffentlichungsnummer: **0 120 266**
**A1**

(12) # EUROPÄISCHE PATENTANMELDUNG

(21) Anmeldenummer: **84101588.6**

(22) Anmeldetag: **16.02.84**

(51) Int. Cl.³: **A 01 G 31/00**
**A 01 G 31/02**

(30) Priorität: **18.02.83 DE 3305581**

(43) Veröffentlichungstag der Anmeldung:
**03.10.84 Patentblatt 84/40**

(84) Benannte Vertragsstaaten:
**BE DE FR GB IT NL**

(71) Anmelder: **Siemens, Werner**
**Krautsander Hafenstrasse 2**
**D-2168 Drochtersen(DE)**

(72) Erfinder: **Siemens, Werner**
**Krautsander Hafenstrasse 2**
**D-2168 Drochtersen(DE)**

(74) Vertreter: **Eisenführ & Speiser**
**Martinistrasse 24**
**D-2800 Bremen 1(DE)**

(54) **Verfahren und Vorrichtung zum erdelosen Aufziehen von Pflanzen.**

(57) Bei einer erdelosen Kultivierung von Pflanzen, bei dem diese auf einer Wasserfläche schwimmend und mit ihren Wurzeln (13) in das Wasser (1) tauchend gehalten werden, wird das mit den Wurzeln der ortsfest gehaltenen Pflanzen in Berührung stehende Wasser laufend ausgetauscht und insbesondere in horizontalem Strom an den Wurzeln vorbeigeführt. Auf diese Weise wird vermieden, daß durch Verarmungen oder Aufkonzentration der im Wasser gelösten oder dispergierten Nährstoffe, Mineralien etc. Wuchsstörungen auftreten. Zur Halterung der Pflanzen gegenüber dem Wasser dient ein schwimmfähiges, ortsfest verankertes Netzgebilde (3), an dem die Pflanzen (12) befestigbar sind. Dabei kann die Maschenweite veränderbar sein, um beispielsweise mit zunehmendem Wuchs der Pflanzen deren gegenseitigen Abstand zu vergrößern.

Fig.1

EP 0 120 266 A1

Croydon Printing Company Ltd

## BESCHREIBUNG

Die Erfindung betrifft ein Verfahren zum erdelosen Aufziehen von Pflanzen, die auf einer Wasserfläche schwimmend und mit ihren Wurzeln in das Wasser tauchend gehalten werden, sowie eine Vorrichtung zur Durchführung dieses und ähnlicher Verfahren.

Die als Wasserkultur, Hydrokultur oder Hydroponik bezeichnete Kultivierung von Pflanzen im Wasser ist seit längerem bekannt. Kleinere oder auch große Behälter nehmen das Wasser auf, in dem Nährstoffe gelöst oder - wie z. B. Mineralien - dispergiert sind. Im allgemeinen erfolgt die Halterung der Pflanzen mit Hilfe gekörnten, gegenüber den Nähr- und Mineralstoffen im allgemeinen inerten Materials, wie beispielsweise Sand, Kies oder Kunststoffkörnern. Im großen Umfange hat auch Blähton Eingang in die Wasserkultur gefunden, der mit seiner großen Oberfläche eine gewisse Pufferwirkung auf die Konzentration der Lösungsbestandteile im Wasser hat.

Beispielsweise aus der DE-OS 25 58 574 ist es ferner bekannt, die Pflanzen auf floßartigen Schwimmkörpern zu halten, um sie auf diese Weise an verschiedene Orte bewegen zu können.

Gemeinsam ist allen Spielarten der Hydroponik ebenso wie der Aquakultur der Wunsch, daß das mit den Wurzeln der Pflanzen in Berührung kommende Wasser einerseits die erforderlichen Nährstoffe und Mineralien in der richtigen Menge (Konzentration) enthält, andererseits möglichst keine pflanzenschädlichen Stoffe aufweist. Wichtig ist ferner, daß dieser Zustand des Wassers auch über längere
Wachstumszeiträume der Pflanzen erhalten bleibt. Zu
Wachstumsstörungen oder Krankheiten kommt es, wenn das
den Pflanzenwurzeln benachbarte Wasser infolge Abgabe
von Nährstoffen und benötigten Mineralien insoweit
verarmt, oder wenn die Nicht-Aufnahme schädlicher Stoffe
aus dem Wasser zu einer Aufkonzentration dieser Stoffe
in Wurzelnähe führt. Letzterem steht hinsichtlich der
schädlichen Wirkungen gleich, wenn die Pflanze schädliche
Stoffe aufnimmt, sie aber nicht verarbeiten kann und es
deshalb in der Pflanze zu Überkonzentration an Schadstoffen kommt. Erschwert wird die Erfüllung der vorgenannten Forderung dadurch, daß die Frage, welche Konzentrationsgrenzen an Nährstoffen nicht unter- oder
überschritten werden sollten ebenso wenig eindeutig zu beantworten  ist wie die Frage, welche Stoffe schädlich sind;
es kommt hinzu, daß dies von Pflanzenart zu Pflanzenart
unterschiedlich ist. Über die Liebhaberkultivierung von
Zierpflanzen hinaus ist es daher zu einer wirtschaftlichen
Nutzung der Hydrophonik oder der Aquakultur bei der
Aufzucht von Pflanzen bislang nicht gekommen.

Der Erfindung liegt demgemäß die Aufgabe zugrunde, Ver-
fahrens- und Vorrichtungsmittel anzugeben, die eine
störungsfreie Aufzucht von Pflanzen auch in großem
Stile zwecks wirtschaftlicher Nutzung erlauben.

Diese Aufgabe wird erfindungsgemäß verfahrenstechnisch
dadurch gelöst, daß das mit den Wurzeln der ortsfest
gehaltenen Pflanzen in Berührung stehende Wasser laufend
ausgetauscht wird. Insbesondere kann vorgesehen werden,
daß das Wasser in horizontalem Strom an den Wurzeln vorbeigeführt wird. Auf diese - überraschend einfache - Weise gelingt es, sowohl Verarmungen als
auch Aufkonzentrationen in Wurzelnähe der Pflanzen
zu vermeiden, so daß einerseits die Pflanzen Nährstoffe und Aufbaumineralien stets in der richtigen
Menge dosiert erhalten, andererseits eine 'Blockade'
des Wurzelbereichs oder gar der Pflanze selbst durch
Schadstoffe nicht auftreten kann.

Eine insbesondere zur Durchführung des vorstehenden
Verfahrens geeignete Vorrichtung zeichnet sich erfindungsgemäß durch ein schwimmfähiges, ortsfest
verankertes Netzgebilde aus, an dem die Pflanzen befestigbar sind. Es hat sich gezeigt, daß ein derartiges
Netz besonders gut geeignet ist, die Pflanzen im Wasser
zu halten, und zwar auch in strömendem Wasser und/oder
bei Windeinwirkung. Das Netzgebilde behindert den
Wasseraustausch auch im Wurzelbereich nicht und hält
die Pflanzen in der erforderlichen Distanz zueinander;
dabei können die Mittel zur Verankerung des Netzgebildes
mit Mitteln zur Veränderung der Maschenweite des Netzgebildes kombiniert sein. Es ist dadurch möglich, den
Abstand zwischen den einzelnen Pflanzen der jeweiligen
Wuchsgröße anzupassen.

Es gibt zwar Pflanzen, die von sich aus schwimmfähig
sind. Im allgemeinen aber muß das Netz die Pflanzen
tragen. Das Netz muß also ausreichend schwimmfähig sein.
Dies kann dadurch gewährleistet werden, daß das Netzgebilde aus einem Material mit geringerem spezifischen
Gewicht als dem des Wassers besteht. Das Netzgebilde kann
aber auch mit Schwimmkörpern versehen sein; sei es, daß Kette und Schuß aus gasgefüllten Schläuchen oder aus geschlossenzelligem Schaumstoff bestehen, oder daß - integral angeformte - Formhohlkörper eingearbeitet sind.

Die Pflanzen werden zweckmäßig an den Kreuzungspunkten von Kette und Schuß des Netzgebildes befestigt. Andere Befestigungsorte sind ebenso wie vielfältige Befestigungsarten möglich, wobei es jeweils auch auf die Art der zu kultivierenden Pflanze ankommt.

Die erfindungsgemäße Kultivierung erlaubt es, sowohl im Freien als auch überdacht Nutzpflanzen mit hohen Flächenerträgen aufzuziehen und dabei Nährstoffe aus Gewässern zu nutzen, die bislang wegen der begleitenden Schadstoffe nicht nutzbar waren; z. B. Flußwässer, überdüngte Abwässer sowie ggf. Brackwasser und in bestimmten Fällen auch Seewasser.

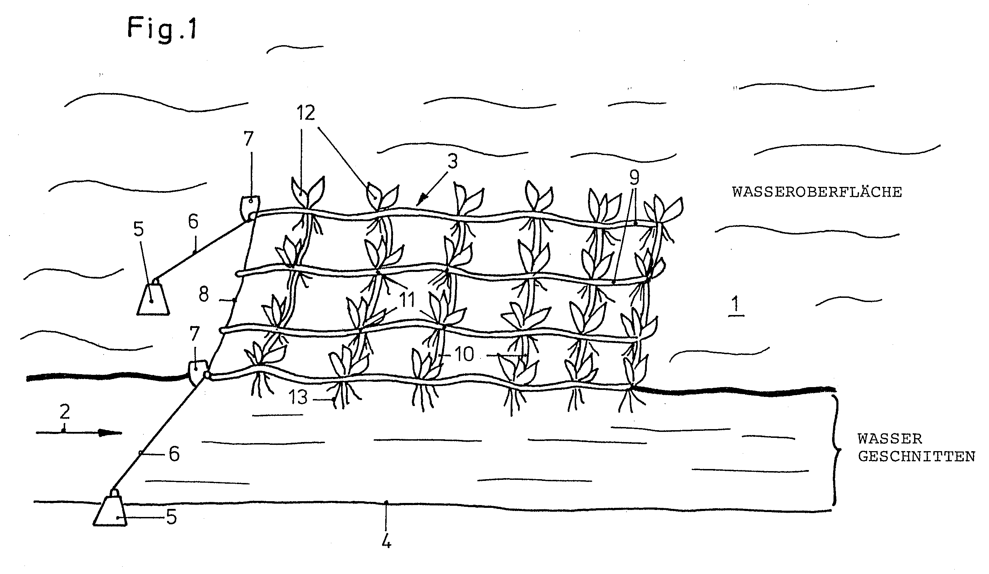

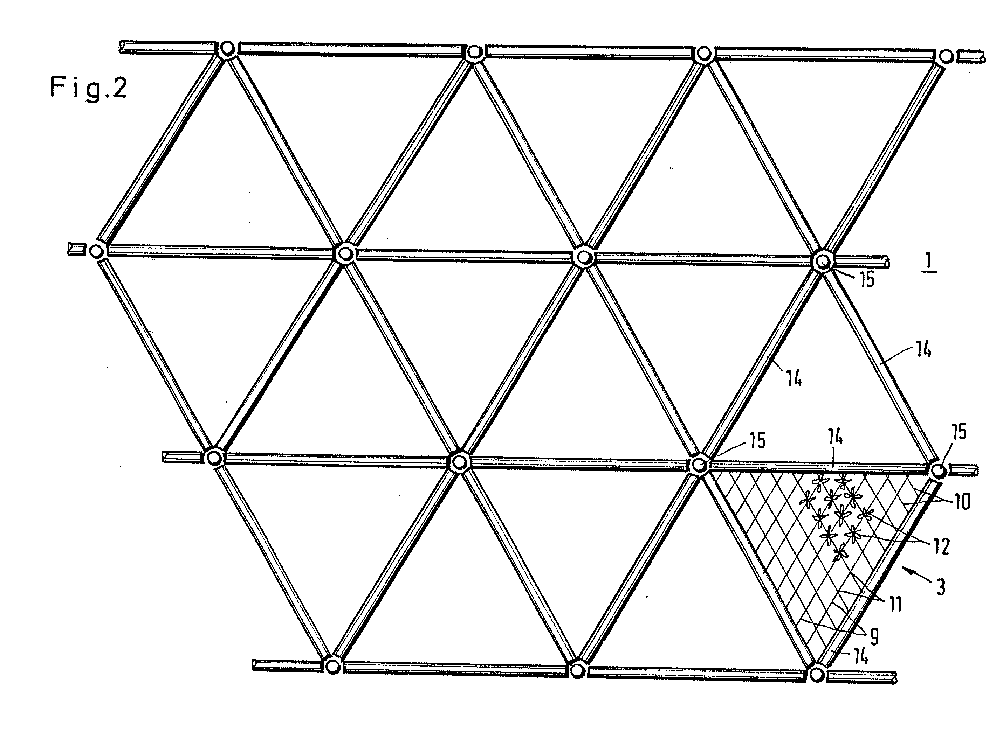

Die Zeichnung veranschaulicht die erfindungsgemäße Vorrichtung an Ausführungsbeispielen. Fig. 1 zeigt schematisch in perspektivischer Darstellung einen Schnitt durch ein Gewässer und die an den Schnitt anschließende Wasseroberfläche mit darauf schwimmendem Netzgebilde. Fig. 2 zeigt in Draufsicht eine größere Anlage.

In einem Gewässer 1 strömt Wasser in Richtung des Pfeiles 2. Ein infolge seines spezifischen Gewichts schwimmfähiges Netzgebilde 3 ist am Boden 4 des Gewässers 1 mit Hilfe von Ankergliedern 5 und Seilen 6 befestigt. Mit 7 sind zusätzliche Schwimmkörper bezeichnet, zwischen denen eine Stell-Leine 8 verläuft, die sich zur Änderung der Maschenweite zwischen den Kettsträngen 9 und den Schußsträngen 10 verändern läßt.

An den Kreuzungspunkten 11 zwischen Kettsträngen 9 und
Schußsträngen 10 sind die Pflanzen 12 befestigt, so daß
ihre Wurzeln 13 in das Wasser 1 eintauchen.

Mit Hilfe des Netzes, insbesondere mit Hilfe der auf
das Netz wirkenden Auftriebskräfte, läßt sich die Eintauchtiefe der Pflanzen in das Wasser verändern. Dadurch kann man sich den Besonderheiten unterschiedlicher Pflanzenarten anpassen und beispielsweise flachwurzelnde Pflanzen anders im Wasser anordnen als Pflanzen mit sich tiefer erstreckenden Wurzeln.

Fig. 2 zeigt in Draufsicht eine größere Anlage, bei der
Netze 3 jeweils zwischen schwimmfähigen (beispielsweise
aus Holz oder Kusntstoff bestehenden) Stangen 14
aufgespannt sind. Die Stangen 14 (von beispielsweise
2,50 m Länge) sind untereinander an Kreuzungspunkten 15
in Form gleichschenkliger Dreiecke - bis zu einem
gewissen Grade beweglich - verbunden. Die Verankerung
am Boden des Gewässers kann dann mittels Seilen 6
erfolgen, die einerseits an Ankergliedern 5, andererseits an den Kreuzungspunkten 15 befestigt sind. In
Fig. 2 ist nur ein Netz 3 zwischen den ein Dreiecksfeld
begrenzenden Stangen 14 dargestellt, jedoch sind auch
alle anderen Felder entsprechend mit Netzen versehen.

Es sei noch erwähnt, daß der laufende Wasseraustausch
an den Wurzeln für die Erfindung entscheidend ist; auf
die Strömungsgeschwindigkeit des Wassers gegenüber den
Wurzeln kommt es kaum an. Unter 'strömendes Wasser' im
Sinne der Erfindung fallen daher auch Gezeitenströme
(Ebbe und Flut) sowie von Bächen durchflossene Teiche,
in denen die Strömung eine relativ langsame ist.

# EISENFÜHR & SPEISER
### Patentanwälte · European Patent Attorneys

**0120266**

Unser Zeichen: S 927

Anmelder/Inh.: Siemens

Aktenzeichen: Neuanmeldung

Datum: 15. Februar 1984

Patentanwälte
Dipl.-Ing. Günther Eisenführ
Dipl.-Ing. Dieter K. Speiser
Dr.-Ing. Werner W. Rabus
Dipl.-Ing. Detlef Ninnemann

Werner Siemens, Krautsander Hafenstraße 2,
2168 Drochtersen

----------------------------------------------

Verfahren und Vorrichtung zum erdelosen Aufziehen von
Pflanzen

----------------------------------------------

## A n s p r ü c h e

1. Verfahren zum erdelosen Aufziehen von Pflanzen, die auf einer Wasserfläche schwimmend und mit ihren Wurzeln in das Wasser tauchend gehalten werden, dadurch gekennzeichnet, daß das mit den Wurzeln der ortsfest gehaltenen Pflanzen in Berührung stehende Wasser laufend ausgetauscht wird.

2. Verfahren nach Anspruch 1, dadurch gekennzeichnet, daß das Wasser in horizontalem Strom an den Wurzeln vorbeigeführt wird.

3. Vorrichtung zur Durchführung insbesondere des Verfahrens nach Anspruch 1 oder 2, gekennzeichnet durch ein schwimmfähiges, ortsfest verankertes Netzgebilde (3), an dem die Pflanzen (12) befestigbar sind.

GE/gj

Martinistraße 24 · D-2800 Bremen 1 · Telefon (0421) 32 80 37 · Telecopierer · Telex 02 44 020 fepat d

4. Vorrichtung nach Anspruch 3, dadurch gekennzeichnet, daß das Netzgebilde (3) aus einem Material mit geringerem spezifischen Gewicht als dem des Wassers (1) besteht.

5. Vorrichtung nach Anspruch 3, dadurch gekennzeichnet, daß das Netzgebilde (3) mit Schwimmkörpern (7) versehen ist.

6. Vorrichtung nach Anspruch 5, dadurch gekennzeichnet, daß die Schwimmkörper/integral mit den Kettsträngen (9) und/oder den Schußsträngen (10) hergestellten Hohlkörpern bestehen.

7. Vorrichtung nach Anspruch 5, dadurch gekennzeichnet, daß die Kettstränge (9) und/oder die Schußstränge (10) gasgefüllte Schläuche sind.

8. Vorrichtung nach Anspruch 5, dadurch gekennzeichnet, daß die Kettstränge (9) und/oder die Schußstränge (10) aus geschlossenzelligem Schaumstoff bestehen.

9. Vorrichtung nach Anspruch 3 oder einem der folgenden Ansprüche, dadurch gekennzeichnet, daß die Pflanzen (12) an den Kreuzungspunkten (11) von Kettsträngen (9) und Schußsträngen (10) des Netzgebildes (3) befestigbar sind.

10. Vorrichtung nach mindestens einem der Ansprüche 3 bis 9, dadurch gekennzeichnet, daß die Maschenweite des Netzgebildes (3) veränderbar ist.

11. Vorrichtung nach Anspruch 10, dadurch gekennzeichnet, daß die Mittel (8) zur Veränderung der Maschenweite mit den Mitteln (5, 6) zur Verankerung des Netzgebildes (3) kombiniert sind.

Fig.1

WASSEROBERFLÄCHE

WASSER GESCHNITTEN

0120266

Fig.2

0120266

Europäisches
Patentamt

**EUROPÄISCHER RECHERCHENBERICHT**

**0120266**
Nummer der Anmeldung

EP 84 10 1588

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | GB-A-2 032 746 (FISONS) * Seite 1, Zeilen 84-101; Figur 1 * | 1,2 | A 01 G 31/00 A 01 G 31/02 |
| | --- | | |
| A | US-A-4 169 050 (SERFLING) * Spalte 5, Zeile 8 - Spalte 6, Zeile 8; Spalte 8, Zeilen 32-34; Figur 1 * | 1 | |
| | --- | | |
| A | US-A-3 660 933 (WONG) * Insgesamt * | 1,2 | |
| | ----- | | |

RECHERCHIERTE SACHGEBIETE (Int. Cl. 3)

A 01 G 31/00
A 01 G 31/02

Der vorliegende Recherchenbericht wurde für alle Patentansprüche erstellt.

| Recherchenort DEN HAAG | Abschlußdatum der Recherche 23-05-1984 | Prüfer HERYGERS J.J. |
|---|---|---|